Europäisches Patentamt

European Patent Office

Office européen des brevets

(11) Publication number : **0 095 870**
**B1**

## EUROPEAN PATENT SPECIFICATION

(45) Date of publication of patent specification :
18.06.86

(51) Int. Cl.⁴ : **A 01 K 27/00**

(21) Application number : **83302880.6**

(22) Date of filing : **19.05.83**

(54) **Animal collar.**

(30) Priority : 28.05.82 US 383051
22.11.82 US 443252

(43) Date of publication of application :
07.12.83 Bulletin 83/49

(45) Publication of the grant of the patent :
18.06.86 Bulletin 86/25

(84) Designated contracting states :
AT BE CH DE FR GB IT LI LU NL SE

(56) References cited :
EP-A- 0 050 782
DE-B- 1 196 019
US-A- 2 880 701
US-A- 3 501 814

(73) Proprietor : **SANDOZ AG**
**Lichtstrasse 35**
**CH-4002 Basel (CH)**

(72) Inventor : **Arrison, William Q.**
**6406 Nutwood Circle**
**Dallas Texas 75252 (US)**
Inventor : **O'Neill, Kenneth W.**
**Box 32306**
**4516 Augusta The Colony Texas 75056 (US)**
Inventor : **Webster, John Stanley**
**6 Park Avenue**
**Gordon, NSW (AU)**

EP 0 095 870 B1

## Description

This invention relates to animal collars. In one aspect, these animal collars are provided with improved safety features whereby the length of the collar strap increases under a tension which might choke the animal. These collars are particularly adaptable to provide ectoparasiticidal compositions for combating insects, ticks and other parasites.

U.S. Patent 3 875 620 discloses an expandible tie adapted to provide an adjustable means for securing trunks and the like of plants to stakes. Said tie has a number of expansible links which are secured together by frangible elements so that as the plant grows the frangible elements will break and the tie will increase in length. The collar of this invention is, however, for use with animals and is provided with anti-choke means.

Animal safety collars having a construction which will break or extend under tension have been previously described. U. S. Patent 2 880 701 discloses a cat and dog collar with an extensible metal spring portion. U. S. Patent 4 044 725 is directed to an animal collar made of resiliently yieldable, molded plastic links having a ball and socket, snap construction which, when subjected to choking pressure, will separate to release the collar. U. S. Patent 4 180 016 is directed to an insecticidal collar using frictional engagement between the tongue and a guide to maintain the loop. Choking tension will pull the tongue free from the guide.

Australian Patent No. 428 718 discloses a releasable one-piece cable tie with a pawl catch which cooperates with tooth projections extending from the surface of the strap in latching engagement. The cable strap also includes a retaining detent which temporarily engages the catch, holding the strap in a loop around the cables while they are being assembled. Australian Patent No. 231 219 is directed to a similar plastic cable tie with tooth projections extending from the surface of the strap. New Zealand Patent specification No. 141 775 describes a tag strap with regularly spaced ridges interacting with corresponding ridges in a buckle portion whereby one end is clasped to the other.

Australian Patent No. 433 136 is directed to an animal collar made of flexible, resilient plastic material which can include an insecticidal composition. Studs on the surface of the collar strap adjacent a guide at one end project through holes located on the tongue end of the strap to hold it in place after the tongue end has been passed through the guide to form a loop.

The straps and animal collars described above neither have the structural features nor provide the advantages of the disposable collar of this invention. The animal collars do not have the structure of this invention in the safety aspects.

The invention is directed to a collar for animals comprising an elongate flexible strap having anti-choke means intermediate the ends of the strap for lengthening the strap and increasing the loop size in response to choking tension on the loop whilst maintaining an integral loop characterised in that the anti-choking means include a frangible link between convoluted portions of the strap. The anti-choking means preferably comprises a plurality of slits. At least one slit through the thickness of the strap extends from a first edge at least half the distance to a second and opposite edge the opposing surfaces of the first slit adjacent the first edge being attached by an integral connecting means dimensioned to fail under choking tension. A second slit through the thickness of the strap adjacent the first slit extends from the second edge of the strap at least half the distance to the first edge opposite thereto, the opposing surfaces of the second slit adjacent the second edge being attached by an integral connecting means dimensioned to fail under choking tension. The connecting means fail or break under choking tension, releasing the opposing edges of the slits associated therewith and permitting them to move apart, thereby lengthening the strap.

The preferred embodiments are made of plastic with some resiliency so that some degree of stretching can take place before the safety release is effected. This is particularly useful when the collar is used on pets and domestic livestock which try to remove a collar by brushing it against a fixed object.

The collars of the invention have preferably a plurality of tooth projections intermediate the ends of the strap and a fastener disposed at one end of the strap and integral with the strap has a passageway with spaced apart, opposing walls extending parallel to the strap for receiving the tongue of the strap to form a loop. One of the walls of the fastener has a hole for receiving one of the strap tooth projections in latching engagement.

Embodiments of the present invention will now be described in detail with reference of the accompanying drawings in which :

Figure 1 is a perspective view of a safety collar in accordance with a preferred embodiment of the present invention in a closed or engaged position.

Figure 2 is a perspective view of a safety collar according to a preferred embodiment of the present invention in the extended position following the application of choking tension.

Figure 3 is a perspective view, fragmented, of an extendable portion of a safety collar according to a preferred embodiment of the present invention shown in the original, unextended condition.

Figure 4 is a perspective view, fragmented, of the extendable section of a safety collar shown in Figure 3 but shown in the extended position.

Figure 5 shows a perspective view, fragmented, of an unengaged collar constructed in accordance with a perferred embodiment of the present invention and in particular the fastener and tongue configurations.

Figure 6 shows a cross-sectional view, fragmented, of an engaged collar in accordance with a preferred embodiment of the present invention and in particular the fastener and tongue configurations.

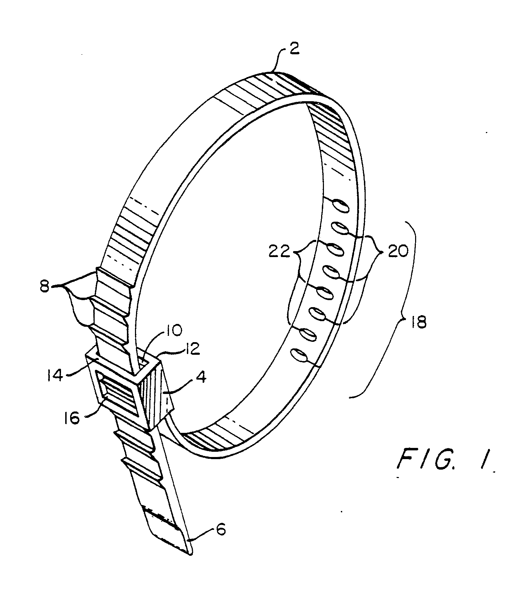

Referring to Figure 1, a perspective view of a safety collar according to a preferred embodiment of the present invention is shown in the closed or engaged position. The strap 2 has a fastener 4 at one end and a tongue 6 at the opposite end. A plurality of tooth projections 8 are spaced along the surface of the strap 2. The fastener 4 has a passageway 10 extending therethrough for receiving and guiding the tongue 6. The fastener includes two opposing walls 12 and 14 defining the passageway, and the wall 14 has a hole in the shape of rectanglar slot 16 theirein for receipt of a tooth projection in locking engagement. The collar preferably has an extensible portion 18 having a plurality of slits 20 and 22 therein extending through the thickness of the strap 2 as will be explained in more detail hereinafter.

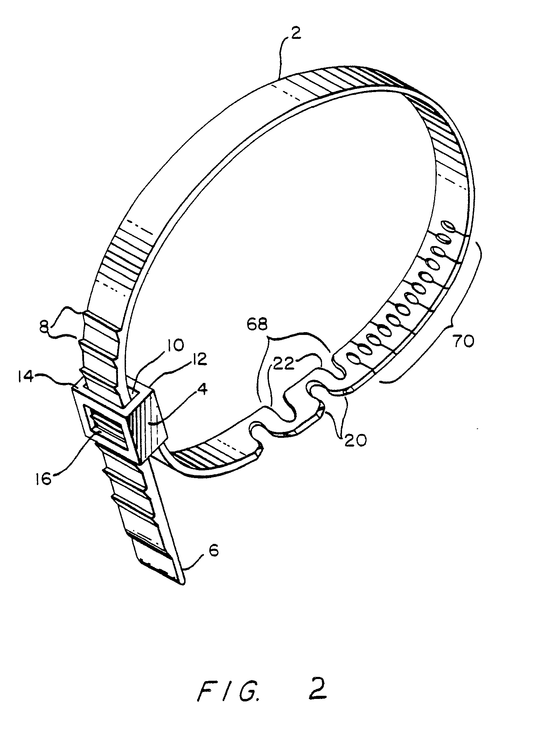

Figure 2 shows a perspective view of a safety collar according to a preferred embodiment of the present invention in the extended configuration. In this illustration, the bridging elements in the extended portion 68 have broken, permitting separation of the opposing faces of the slits 20 and 22, lengthening the strap and providing a larger loop. The bridging elements in the unextended, slotted portion 70 have not been broken because the tension was released following the extension of slotted portion 68. If the collar were snagged by a projection so that the animal could not free itself, continued pressure would cause breaking of the bridging elements in the unextended portion 70, further enlarging the collar and permitting the animal to escape by withdrawing its head from the loop.

The safety collars according to preferred embodiments of the present invention have been shown and described above with both the integral molded fastener 4 and extensible portion 18. Safety collars comprising the extensible portion 18 withouth the fastener 4 may also be constructed in accordance with aspects of the present invention. In the latter embodiments, other types of fasteners such as metal buckles can be attached to the end of the strap, for example as shown in U. S. Patent No. 3 918 407.

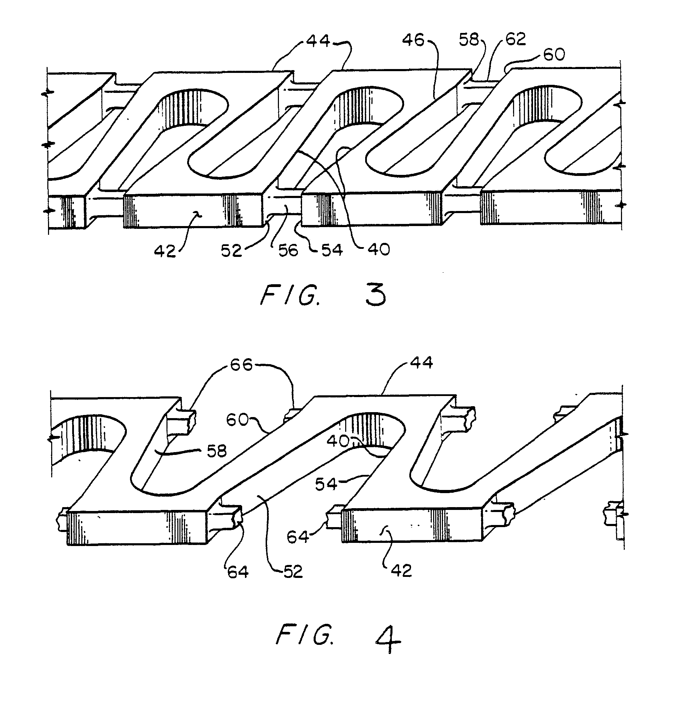

Referring to Figure 3, a fragmented, perspective view of the extensible portion of a safety collar according to a preferred embodiment of the present invention is shown. Slots 40 extend from the strap edge 42 about 50 to 90 percent of the distance to the opposite edge 42. These slots extend through the full thickness of the strap. The opposing surfaces of faces 52 and 54 of the slot 40 adjacent the edge 42 are joined by an integral connecting bridge element 56. Similarly, the opposing faces 58 and 60 of slot 46 adjacent the edge 44 are joined by integral connecting bridge element 62. The slot profiles preferably have a curved configuration wherein the slot faces 52, 54 and 58, 60 form a continuous, curved surface. This curved configuration resists the formation of cracks which might weaken the collar when the bridging elements 56 and 62 break.

The bridging elements 56 and 62 are formed integral with the strap. They are designed to have a specifically determined cross-sectional area dimensioned to provide a preselected breaking point which corresponds to the estimated choking tension of the animal for which the collar is designed. The specific size of the bridging elements 56 and 62 will therefor depend upon the tensile strength of the plastic formulation. The tensile strength can be established by standard measurement procedures, and the corresponding cross-sectional area can be calculated for the animal to provide the requisite breaking tension Suitable tensions are provided in Table A.

Table A

| Animal | Weight, kg | Choking Tension, kg |
|---|---|---|
| Dog (small) | 2,3-6,8 | 2,3 |
| Dog (medium) | 6,8-22,7 | 4,5 |
| Dog (large) | above 22,7 | 6,8 |
| Cat | 2,3-5,4 | 2,0 |
| Lamb | up to 22,7 | 4,5 |
| Sheep | 34,0-45,4 | 13,6 |
| Calf | up to 203,4 | 20,3 |
| Bovine | 385,9-544,8 | 68,1 |

Referring to Figure 4, a fragmented perspective view of the extensible portion of the animal collar shown in Figure 3 is shown in the extended position. When breaking tension is applied, the bridging elements 56 and 62 break leaving opposing terminal stubs 64 and 66 permitting the opposing surfaces 52, 54 and 58, 60 of the slots 40 and 46 to move apart. When the tension is released, the collar will return to its former configuration if it is constructed of a resilient, elastic plastic material. However, the constricting force exerted by the collar will be irreversibly decreased. The slots 40 and 46 are preferably in alternating sequence, and the total number of slots is selected to determine possible lengthening desired. For dog and cat collars, the total number of slots is preferably from 10 to 12 and for sheep, preferably from 10 to 20, with half the slots extending from each edge.

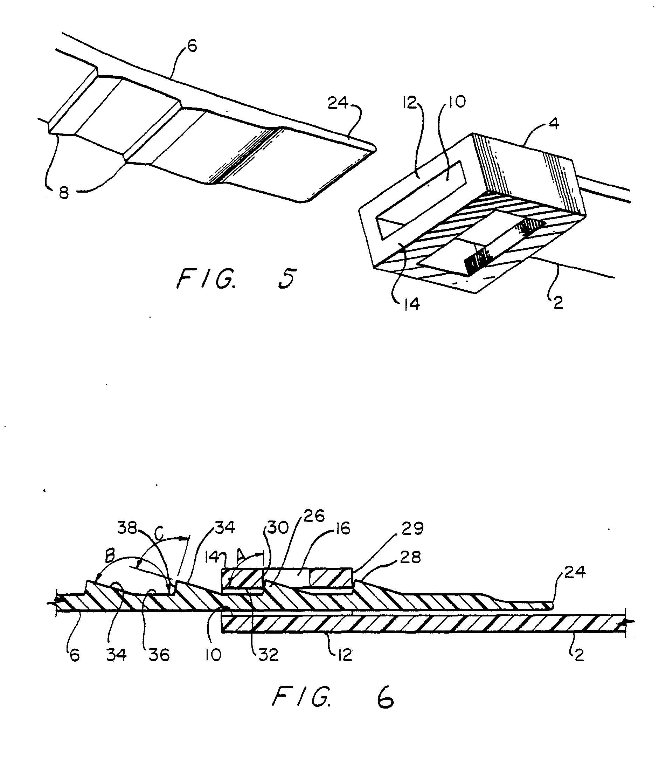

Referring to Figure 5, a fragmented, perspective view of the fastener and tongue elements of a collar according to a preferred embodiment of the present invention are shown in the unengaged position. The leading end 24 of the tongue 6 has a reduced thickness to facilitate insertion into the fastener passageway 10. The tooth projections 8 are formed integral with one surface of the strap.

Referring to Figure 6, a fragmented, crosssectional view of an engaged collar and in particular the fastener and tongue configurations is shown. The fastener comprises opposing walls 12 and 14, the wall 12 preferably being integral with the end of strap 2. The opposing wall has a hole or slot 16 therein for receipt of a tooth projection 26 in latching engagement. The hole or slot 16 has a transverse fastener slot wall 30, facing in a reverse direction from the entrance of passageway 10, which preferably forms an angle (A) of 90° or less with the internal fastener wall surface 32 of wall 14.

The tooth projections are formed by a leading surface 34 which forms an obtuse angle (B) with the strap surface 36 which is preferably greater than 100°. The tooth has a following surface 38 further away from the tongue 6 than leading surface 34 of the same projection which forms an acute angle (C) with the intersecting leading surface 34 which is preferably less than 80°.

The reverse edge 29 of the fastener functions as a secondary stop means. When a tooth projection 28 is pulled completely through the fastener passageway 10, it butts against the reverse edge 29 in response to tensional forces, reinforcing the latching engagement of the tooth projection 26 with slot 16. If an animal such as a cat succeeds in working the projection 26 out of slot 16 and free from the fastener, tooth projection 28 is pulled into locking engagement with slot 16, thereby frustrating the animal's efforts.

The animal collars of this invention preferably have an inexpensive disposable plastic construction and can be used as identification collars, for example, or as a carrier for octoparasiticides such as insecticides. Animal collars having insecticidal activity are known and are commercially available. They protect small animals, in particular dogs and cats, against infestation by Mallophaga and Siphonaptera and, in some cases, also against Ixodidae.

The animal collars according to the present invention are useful for livestock and/or pets, for example sheep, bovine, horses, pigs, goats, dogs and cats. They can be employed against numerous harmful animal parasites (ectoparasites) from the class of Arachnidae and the class of insects.

The safety collars of this invention can be made from conventional thermoplastic, plasticized polymer compositions by conventional methods known in the art, and neither the specific compositions nor the specific methods of manufacture are a part of this invention. For example, such compositions can be prepared by mechanical mixing the powdered ingredients which are then heated to bring about a homogeneous melt which can be cast, extruded, injected or molded into the desired shape. It can also be cast from plastisol compositions such as are described in U. S. Patent 3 918 407.

A suitable thermoplastic resin which is satisfactorily compatible with the plasticizer and for ectoparasiticidally active collars, compatible plasticizer and for ectoparasiticidally active collars, compatible with the active ectoparasiticide can be employed. For example, for dog collars to control ectoparasites, the thermoplastic resin needs to have adequate strength and flexibility to withstand shaping into a collar without cracking or crumbling and sufficient durability for the dog to wear for several weeks to a few months. Further, the resin must be one from which the plasticizer will not exude at normal temperatures and conditions and which will also permit adequate migration of the active extoparasiticide from the body of the composition to the surface thereof.

The foregoing requirements of the resin are fulfilled by vinylic polymers and copolymers having a molecular weight of more than 1000 (solid at ambient temperatures). Suitable polymers are selected from the homopolymers and copolymers of vinyl chloride, vinyl acetate, vinyl acetals, vinyl alcohol, vinylbenzene and divinybenzene and vinylidene chloride. The copolymers may, in addition, contain additional components such as ethylenic, propylenic, butadienic, isoprenic, acrylic and methacrylic components. Other suitable polymers include polyethylene ; polypropylene ; copolymers of ethylene and propylene ; nylon ; polyacrylates such as polymers and copolymers of methylacrylate, ethylacrylate, methylmethacrylate and ethylmethacrylate ; polyurethanes, polyaldehydes ; synthetic and natural elastomers, such as *Hevea brasiliensis,* cis-1,4-polyisoprene, polybutadiene, SBR rubber, and copolymers of such rubbers ; cellulose plastics, such as cellulose acetate, cellulose butyrate, cellulose nitrate and the like. The resin comprises from about 35 to 75 percent and preferably from 40 to 70 percent, by weight of the total composition.

Preferred polymers and copolymers are polyvinyl chloride, polyurethanes, polyvinyl acetate, cellulose acetate, polyethylene, polybutadiene, polyaldehydes and polypropylene.

The plasticizers which may be used are those conventionally used in the plasticization of thermoplastic resins such as polyvinyl chloride (PVC). The plasticizers are generally of two types, i. e., phosphate esters and esters of polybasic carboxylic acids. The phosphate esters are preferably relatively non-volatile and inert.

The amount of plasticizer to use will be that amount required to plasticize the resin to the required degree of flexibility. In compositions containing ectoparasiticides, the plasticizer also contributes to the rate at which the active ingredient migrates to the surface of the composition. Different plasticizers and amount of plasticizer influence this rate of migration. Higher concentrations of plasticizer tend to raise the rate of ectoparasiticide migration to the surface. The maximum rate of migration seems to occur when using plasticizers having a solubility parameter of about 8.4 to 8.7 Hildebrand units. In general plasticizer concentrations may vary from about 25 to 50 percent by weight of the total composition with amounts of 30 to 40 percent by weight being preferred.

The preferred plasticizer for polyvinyl chloride is dioctyl adipate in concentrations of 30 to 50 weight percent.

The preferred animal collars of this invention contain one or more active ingredients which are effective to protect or free an animal from ectoparasites. Ectoparasiticidal agents which may be used are carbamates, organo-phosphorous compounds, organo-chlorine compounds, pyrethroids and mixtures thereof.

The composition according to the invention comprises 2-25 percent by weight of the ectoparasiticidal agent and preferably 2-15 percent.

Other ingredients such as stabilizers, attractants, dyes, fillers, odorants or other biocides may also be used in the compositions without departing from the scope of this invention. Useful additives such as carbon black, titanium dioxide and other insoluble pigments and fillers, which when added in small amounts, i. e., one weight percent or less serve to color the resinous mixture.

This invention is further illustrated by the following specific but non-limiting hypothetical example.

Example 1

The following ingredients are blended at a temperature of 135-140° F until uniform :

| Ingredient | Conc., wt. % |
| --- | --- |
| Polyvinyl chloride | 51.6 |
| o-Isopropoxyphenyl N-methylcarbamate | 10.3 |
| Octyl epoxytallate | 2.3 |
| Dioctyl phthalate | 9.1 |
| Diisobutyl adipate | 21.1 |
| Stearic acid | 0.8 |

The mixture is injection molded into the shape of a collar having the configuration shown in Figure 1, the temperature of the composition not exceeding 325° F, and the die is cooled to 60° to 70° F.

## Claims

1. A collar for animals comprising an elongate flexible strap (2) having anti-choke means (20, 22) in an extendible portion (18) intermediate the ends of said strap for lengthening the strap and increasing the loop size in use in response to choking tension on the loop, whilst maintaining an integral loop characterised in that said anti-choking means (20, 22) include a frangible link (56, 62) between convoluted portions of the strap (2).

2. A collar according to Claim 1, wherein the anti-choking means (20, 22) comprises a first slit (40) through the thickness of the strap (2) and extending from a first edge (42) of the strap (2) at least half the distance to the second edge (44) opposite thereto, the opposing surface (52, 54) of the first slit adjacent the first edge being attached by an integral connecting means (56) dimensioned to fail under a predetermined choking tension, and a second slit (46) adjacent the first slit (40) through the thickness of the strap and extending from the second edge (44) at least half the distance to the first edge (42), the opposing surfaces (58, 60) of the second slit adjacent the second edge (44) being attached by an integral connecting means (62) dimensioned to fail under a predetermined choking tension, whereby when the connecting means fail under said predetermined choking tension, the opposing surfaces of the slits associated therewith may move apart thereby lengthening the strap.

3. A collar according to Claim 2, wherein the slits comprise opposed spaced-apart surface portions.

4. A collar according to Claim 3, wherein the opposed surface portions are curved to form a continuous surface.

5. A collar according to any one of Claims 2 to 4 having at least 5 slits extending from the first edge and at least 5 slits extending from the second edge in alternate sequence with the slits extending from the first edge.

6. A collar for animals according to any one of the preceding claims wherein the strap has a plurality of tooth projections (8) intermediate the ends of the strap, fastening means (4) disposed at one end thereof and integral therewith, characterised in that the fastening means (4) has a passageway (10) with spaced apart, opposing walls (12, 14) extending parallel to said strap for receiving the strap to form a loop, one wall (14) thereof having a detent means (16) for receiving one of said tooth projections in latching engagement.

7. A collar according to Claim 6, wherein the tooth projections (8) have a leading surface (34) which forms an obtuse angle with the surface (36) of the strap and the following surface (38) of the tooth projections forms an acute angle with the leading surface (34).

8. A collar according to Claim 6 or Claim 7, wherein the detent means (16) is a hole having a rectangular shape.

9. A collar according to any one of Claims 6 to 8, wherein the tooth projections (8) extend from and are integral with the full width of the strap.

10. A collar according to any one of the preceding claims including an ectoparasiticide.


## Patentansprüche

1. Ein Halsband für Tiere enthaltend einen verlängerten flexiblen Riemen, (2) der Antierstickungsmittel (20, 22) in einem erweiterungsfähigen Teil (18) zwischen den Enden dieses Riemen hat, um den Riemen zu verlängern und den Umfang der sich im Gebrauch befindlichen Schlinge zu vergrössern als Antwort auf eine Erstickungsspannung auf die Schlinge, bei gleichzeitiger Erhaltung einer integralen Schlinge, dadurch gekennzeichnet, dass die Antierstickungsmittel (20, 22) ein zerbrechliches Glied (56, 62) zwischen geschlängelten Teilen des Riemen enthalten.

2. Ein Halsband gemäss Anspruch 1, worin die Antierstickungsmittel (20, 22) eine erste Spalte (40) über die Dicke des Riemen (2) enthalten und die sich erstreckt von einem ersten Rand (42) des Riemen über mindestens die Hälfte des Abstandes zum zweiten gegenüberliegenden Rand, wobei die gegenüberliegen Flächen (52, 54) der ersten, an dem ersten Rand angrenzenden Spalte miteinander verknüpft sind mit Hilfe eines integralen Verbindungsmittel (56), das beschaffen ist, um nachzugeben unter einer vorherbestimmten Erstickungsspannung, und eine zweite Spalte (46), angrenzend an die erste Spalte (40), über die Dicke des Riemen und die sich erstreckt vom zweiten Rand (44) über mindestens die Hälfte des Abstandes bis zum ersten Rand (42), und wobei die gegenüberliegenden Flächen (58, 60) der zweiten am zweiten Rand angrenzenden Spalte (44) mit Hilfe eines integralen Verbindungsmittels (62) verbunden ist, das beschaffen ist um unter einer vorherbestimmten Erstickungsspannung nachzugeben, wobei die gegenüberliegenden Flächen der damit verbundenen Spalten sich unter Verlängerung des Riemen auseinanderbewegen können.

3. Ein Halsband gemäss Anspruch 2, worin die Spalten gegenüberliegende, räumlich getrennte Flächenteile enthalten.

4. Ein Halsband gemäss Anspruch 3, worin die gegenüberliegenden Flächenteile gekrümmt sind zwecks Bildung einer kontinuierlichen Fläche.

5. Ein Halsband gemäss einem der Ansprüche 2 bis 4 mit mindestens 5 Spalten, die sich erstrecken von dem ersten Rand, und mindestens 5 Spalten, die sich erstrecken von dem zweiten Rand, in alternierender (Reihen) Folge mit den Spalten die sich von dem ersten Rand erstrecken.

6. Ein Halsband für Tiere gemäss einem der vorhergehenden Ansprüche, worin der Riemen eine Vielzahl von Zahnspitzen (8) zwischen den Enden des Riemen hat, ein Befestigungsmittel (4) zurechtgelegt an einem Ende davon und, damit integriert, dadurch gekennzeichnet, dass das Befestigungsmittel (4) einen Durchgang (10) aufweist mit räumlich getrennten, gegenüberliegenden Wänden (12, 14), die sich parallel zu dem Riemen erstrecken, um den Riemen unter Bildung einer Schlinge zu empfangen, wobei eine Wand (14) davon ein Sperrsystem (16) hat, um eine solche Zahnspitze in einer einschnappender Verbindung zu empfangen.

7. Ein Halsband gemäss Anspruch 6, worin die Zahnspitzen (8) eine leitende Oberfläche (34) haben, die einen stumpfen Winkel mit der Oberfläche (36) des Riemen bildet, und die darauffolgende Oberfläche (38) der Zahnspitze bildet einen scharfen Winkel mit der leitenden Oberfläche (34).

8. Ein Halsband gemäss Anspruch 6 oder Anspruch 7, worin das Sperrsystem (16) eine Oeffnung in rechteckiger Form ist.

9. Ein Halsband gemäss einem der Ansprüche 6 bis 8, worin die Zahnspitzen (8) sich ausdehnen über und ingegral sind mit der vollständigen Breite des Riemen.

10. Ein Halsband gemäss einem der vorhergehenden Ansprüche, welches ein Ektoparasitizid enthält.


## Revendications

1. Un collier pour animaux comprenant une courroie flexible allongée (2) ayant des moyens anti-étranglement (20, 22) dans une partie extensible (18) située entre les extrémités de ladite courroie dans le but d'allonger la courroie et d'augmenter la dimension de la boucle dans l'utilisation en réponse à une tension d'étranglement sur le collier, tout en conservant une boucle intégrale, caractérisé en ce que lesdits moyens anti- étranglement (20, 22) comportent, entre des parties sinueuses de la courroie (2), un raccord susceptible d'être rompu (56, 62).

2. Un collier selon la revendication 1, dans lequel les moyens anti-étranglement (20, 22) comprennent une première fente (40) à travers l'épaisseur de la courroie (2) et s'étendant à partir d'un premier bord (42) de la courroie (2) sur au moins la moitié de la distance jusqu'au second bord (44) qui lui est opposé, les surfaces opposées (52, 54) de la première fente adjacente au premier bord étant fixées par des moyens de raccordement solidaires (56) ayant une dimension conçue pour céder sous une tension d'étranglement prédéterminée, et une seconde fente (46) adjacente à la première fente (40) à travers l'épaisseur de la courroie et s'étendant à partir du second bord (44) sur au moins la moitié de la distance jusqu'au premier bord (42), les surfaces opposées (58, 60) de la seconde fente adjacente au second bord (44) étant reliées par des moyens de raccordement solidaires (62) ayant une dimension conçue pour céder sous une tension d'étranglement prédéterminée, grâce à quoi, lorsque les moyens de raccordement cèdent sous ladite tension d'étranglement prédéterminée, les surfaces opposées des fentes qui y sont associées peuvent s'écarter l'une de l'autre, allongeant ainsi la courroie.

3. Un collier selon la revendication 2, dans lequel les fentes comprennent des surfaces opposées espacées l'une de l'autre.

4. Un collier selon la revendication 3, dans lequel les surfaces opposées sont incurvées pour former une surface continue.

5. Un collier selon l'une quelconque des revendications 2 à 4, ayant au moins 5 fentes s'étendant à partir du premier bord et au moins 5 fentes s'étendant à partir du second bord en alternance avec les fentes s'étendant à partir du premier bord.

6. Un collier pour animaux selon l'une quelconque des revendications précédentes, dans lequel la courroie possède une multitude de dentelures (8) entre ses extrémités, des moyens de fixation (4) disposés à l'une des extrémités de la courroie et qui en font partie intégrante, caractérisé en ce que les moyens de fixation (4) comportent un passage (10) avec des parois opposées espacées l'une de l'autre (12, 14) qui s'étendent parallèlement à ladite courroie et destiné à recevoir la courroie pour former une boucle, une de ces parois (14) ayant des moyens d'arrêt (16) destinés à recevoir une desdites dentelures dans la prise d'accrochage.

7. Un collier selon la revendication 6, dans lequel les dentelures (8) comportent une surface conductrice (34) qui forme un angle obtus avec la surface (36) de la courroie et la surface suivante (38) des dentelures forme un angle aigu avec la surface conductrice (34).

8. Un collier selon la revendication 6 ou 7, dans lequel le moyen d'arrêt (16) est une ouverture de forme rectangulaire.

9. Un collier selon l'une quelconque des revendications 6 à 8, dans lequel les dentelures (8) s'étendent sur toute la largeur de la courroie et font partie intégrante de cette dernière.

10. Un collier selon l'une quelconque des revendications précédentes comprenant un ectoparasiticide.

7

FIG. 1.

FIG. 2

FIG. 3

FIG. 4

3

0 095 870

FIG. 5

FIG. 6

4